# FASCICULE DE BREVET EUROPEEN

(11) **EP 3 835 192 B1**
(45) Date de publication et mention de la délivrance du brevet: **12.10.2022**
(21) Numéro de dépôt: 20208410.9
(22) Date de dépôt: 18.11.2020
(51) Int. Cl.: B63B 17/00, H01M 10/6567

(54) **SYSTÈME DE FIXATION D'UNE PLURALITÉ DE PACKS BATTERIE DE FAÇON EMPILÉE LES UNS SUR LES AUTRES À BORD D'UN NAVIRE COMPRENANT DES PITONS, BLOC D'ALIMENTATION ET PROCÉDÉ DE FIXATION ASSOCIÉS**
SYSTEM ZUM SICHERN EINER VIELZAHL VON BATTERIEPAKETEN IN GESTAPELTER WEISE ÜBEREINANDER AN BORD EINES SCHIFFES MIT BOLZEN, STROMVERSORGUNGSEINHEIT UND SICHERUNGSVERFAHREN DAFÜR
FIXING SYSTEM OF A PLURALITY OF BATTERY PACKS STACKED ON EACH OTHER IN A VESSEL COMPRISING PITONS, ASSOCIATED ALIMENTATION BLOC AND FIXING METHOD

(30) Priorité: 19.11.2019 FR 1912863
(43) Date de publication de la demande: 16.06.2021
(73) Titulaire: Naval Group, 75015 Paris (FR)
(72) Inventeur: BODET, Ludovic, 56311 LORIENT CEDEX (FR); MAHE, Erwan, 56311 LORIENT CEDEX (FR); FERAL, Hervé, 56311 LORIENT CEDEX (FR)
(74) Mandataire: Lavoix

(56) Documents cités:
- EP-A1- 3 547 398
- WO-A1-2014/053304
- US-A1- 2008 099 646

## Description

La présente invention concerne un système de fixation d'une pluralité de packs batterie de façon empilée les uns sur les autres à bord d'un navire. Ce système comprend notamment une pluralité de pitons.

La présente invention concerne également un bloc d'alimentation et un procédé de fixation associés.

Par navire, on entend tout engin apte à naviguer sur la surface maritime (tel qu'un bateau) et éventuellement submersible (tel qu'un sous-marin).

De manière connue en soi, pour mettre en oeuvre ses différentes fonctionnalités, les navires utilisent souvent de l'énergie électrique stockée dans des batteries embarquées.

Le document WO 2014/053304 divulgue par exemple un système de fixation d'une pluralité de packs batterie.

Ces batteries se présentant généralement sous la forme de packs d'accumulateurs, appelés également packs batterie, doivent être adaptées au fonctionnement dans un environnement très instable, présentant parfois des chocs importants.

Cet environnement peut également subir des dilations importantes liées à des conditions thermiques variables.

Ainsi, pour assurer une bonne fixation des packs batterie dans un tel environnement, il est connu d'installer ces packs dans un local spécial adapté à cet effet.

En particulier, il est connu d'utiliser des crochets sur le fond des packs batterie permettant de les accrocher au sol du local et ainsi, de les bloquer verticalement.

Pour assurer un blocage horizontal, il est connu d'utiliser des calles, coins, tasseaux, etc. entre différents packs batterie ou alors entre ces packs batterie et les murs du local.

On conçoit alors que cela impose de nombreuses contraintes d'installation de ces packs batterie. Ces contraintes imposent par exemple l'installation des packs batterie en une seule couche ce qui conduit, bien entendu, à des pertes d'espace importantes.

La présente invention a pour but de remédier à ces inconvénients et de proposer un système de fixation permettant d'installer des packs batterie de façon empilée les uns sur les autres et cela dans un environnement très instable.

À cet effet, l'invention a pour objet un système de fixation un système de fixation d'une pluralité de packs batterie de façon empilée les uns sur les autres à bord d'un navire, le navire comportant un local batterie dont la longueur s'étend selon un axe X et est délimitée par un mur de fond, la largeur s'étend selon un axe Y et est délimitée par deux murs latéraux et la hauteur s'étend selon un axe Z et est délimitée par un plancher et un plafond ;
chaque pack batterie présentant une forme sensiblement parallélépipédique définissant deux parois latérales, une paroi proximale, une paroi distale, une paroi supérieure, et une paroi inférieure, chaque paroi latérale définissant une pluralité de rainures de fixation ;
les packs batterie étant destinés à être posés en plusieurs couches sur le plancher du local batterie entre ses murs latéraux et contre le mur de fond, les packs batterie d'une même couche étant destinés à être posés l'un à côté de l'autre de façon adjacente par leur paroi latérale de sorte que les rainures de ces parois latérales soient disposées en regard et de sorte que les parois distales de ces packs soient adjacentes au mur de fond ;
le système comprend :
   - une pluralité de pièces de blocage latéral, chaque pièce de blocage latéral étant destinée à être insérée dans une rainure d'un pack batterie ;
   - une pluralité de pitons, chaque piton définissant une partie inférieure filetée, une partie supérieure taraudée et une partie intermédiaire comportant une rondelle biseautée ;
chaque piton étant adapté pour être inséré dans un orifice formé entre deux rainures en regard pourvues de pièces de blocage latéral de deux packs batterie mis l'un à côté de l'autre dans une même couche et pour bloquer entre les murs latéraux les packs batterie selon l'axe Y par coopération de la rondelle biseautée avec les pièces de blocage latéral ;
lorsqu'il est inséré dans l'orifice correspondant, chaque piton étant adapté en outre pour fixer selon l'axe Z chaque couche de packs batterie supérieure à une couche de packs batterie inférieure par coopération de sa partie inférieure filetée avec la partie supérieure taraudée du piton lui correspondant inséré dans l'orifice formé entre deux packs batterie de la couche de packs batterie inférieure.

Suivant d'autres aspects avantageux de l'invention, le système comprend une ou plusieurs des caractéristiques suivantes, prise(s) isolément ou suivant toutes les combinaisons techniquement possibles :
- chaque rondelle biseautée définit un orifice central et deux pans inclinés s'étendant de part et d'autre de l'orifice central ;
- chaque pièce de blocage latéral définit un pan incliné apte à coopérer avec le pan incliné de chaque rondelle biseautée ;
- chaque piton comprend une tige formant la partie inférieure filetée et la partie intermédiaire de ce piton, et une douille formant la partie supérieure de ce piton, la rondelle biseautée définissant un orifice central par lequel elle montée rotative sur la tige de ce piton et mobile le long de celle-ci ;
- une pluralité de supports muraux, chaque support mural étant destiné à être monté sur l'un des murs latéraux pour coopérer avec la rondelle biseautée d'un piton inséré entre ce support mural et une rainure d'un pack batterie adjacent à ce mur latéral ;
   avantageusement, chaque support mural comprenant une plaque de fixation destinée à être fixée sur le mur latéral correspondant, une mousse parasismique montée sur la plaque de fixation et une plaque d'interface montée sur la mousse parasismique et définissant une forme apte à coopérer avec la rondelle biseautée correspondante pour bloquer entre les murs latéraux selon l'axe Y les packs batterie d'une même couche ;
- une couche de mousse parasismique destinée à être entreposée entre le plancher et une première couche de packs batterie, des orifices taraudés étant formés dans le plancher pour coopérer avec les parties inférieures filetées des pitons insérés dans les orifices formés entre les rainures des packs batterie de cette première couche de packs batterie ;
- les packs batterie de chaque couche de packs batterie supérieure sont destinés à être disposés de manière alignée selon l'axe Z avec les packs batterie de la couche de packs batterie inférieure adjacente ou en quinconce avec ces packs ;
- les packs batterie d'une couche de packs batterie supérieure sont destinés à être disposés en quinconce avec les packs batterie de la couche de packs batterie inférieure adjacente, des orifices taraudés sont définis sur les parois supérieures des packs batterie de cette couche de packs batterie inférieure, chacun desdits orifices étant apte à coopérer avec la partie inférieure filetée de chacun des pitons insérés entre les packs batterie de la couche de packs batterie supérieure ;
- une pluralité de ridoirs destinés à être disposés entre le plafond et une dernière couche de packs batterie pour bloquer les packs batterie selon l'axe X ;
- chaque ridoir comprend une première extrémité destinée à être fixée au plafond et une deuxième extrémité destinée à coopérer avec la partie supérieure taraudée d'un piton inséré dans l'orifice formé entre des rainures de deux packs batterie de la dernière couche de packs batterie, chacune desdites rainures étant adjacente à la paroi proximale du pack batterie correspondant ;
- une pluralité de barres butées destinés à être disposés entre le plafond et une dernière couche de packs batterie pour bloquer les packs batterie selon l'axe X;
- chaque barre butée comprend une première extrémité destinée à être fixée au plafond et une deuxième extrémité destinée à venir en butée selon l'axe X entre la paroi distale d'un pack batterie de la dernière couche de packs batterie et le mur de fond.
- la deuxième extrémité de chaque barre butée comprend une partie plate et au moins un pion faisant saillie de la partie plate ;
   le système comprenant en outre une pluralité de pièces de blocage de fond, chaque pièce de blocage de fond étant destinée à être disposée sur la paroi distale d'un pack batterie et apte à recevoir au moins un piton pour le bloquer entre cette paroi distale et le mur de fond ;
   le ou chaque pion de la deuxième extrémité de chaque barre butée étant adaptée pour être installé librement dans la partie supérieure taraudée d'un piton reçu dans une pièce de blocage de fond.
- une pluralité de pièces de verrouillage, chaque pièce de verrouillage étant destinée à être disposée sur la paroi distale d'un pack batterie ;
- une pluralité de verrous, chaque verrou étant destiné à être disposé sur le mur de fond du local batterie en regard d'au moins une pièce de verrouillage et apte à coopérer avec cette pièce de verrouillage afin de bloquer le pack batterie selon l'axe X.

La présente invention a également pour objet un procédé de fixation d'une pluralité de packs batterie de façon empilée les uns sur les autres à bord d'un navire, mis en oeuvre au moyen du système de fixation tel que défini précédemment et comportant les étapes suivantes :
- insérer les pièces de blocage latéral dans au moins certaines des rainures des packs batterie ;
- constituer une première couche de packs batterie ou une couche de packs batterie intermédiaire en posant chaque pack batterie sur le plancher couvert d'une mousse parasismique ou sur un pack batterie d'une couche de packs batterie inférieure ou à cheval entre deux packs batterie d'une couche de packs batterie inférieure ;
- insérer les pitons dans les orifices formés entre chaque couple des rainures en regard pourvues des pièces de blocage latéral ;
- visser les parties inférieures filetées des pitons dans des orifices formés au plancher ou dans les parties supérieures taraudées des pitons insérés dans les orifices correspondants d'une couche de packs batterie inférieure ou dans des orifices formés sur les parois supérieures des packs batterie d'une couche de packs batterie inférieure ;
- constituer une dernière couche de packs batterie en posant chaque pack batterie sur un pack batterie d'une couche de packs batterie inférieure ou à cheval entre deux packs batterie d'une couche de packs batterie inférieure ;
- bloquer la dernière couche de packs batterie contre le plafond.

La présente invention a également pour objet un bloc d'alimentation d'un navire, le navire comportant un local batterie dont la longueur s'étend selon un axe X et est délimitée par un mur de fond, la largeur s'étend selon un axe Y et est délimitée par deux murs latéraux et la hauteur s'étend selon un axe Z et est délimitée par un plancher et un plafond ;
le bloc d'alimentation comprenant une pluralité de packs batterie fixés de façon empilée les uns sur les autres ;
chaque pack batterie présentant une forme sensiblement parallélépipédique définissant deux parois latérales, une paroi proximale, une paroi distale, une paroi supérieure, et une paroi inférieure, chaque paroi latérale définissant une pluralité de rainures de fixation ;
le bloc d'alimentation étant destiné à être installé dans le local batterie de sorte que les packs batterie soient posés en plusieurs couches sur le plancher du local batterie entre ses murs latéraux et contre le mur de fond, les packs batterie d'une même couche étant destinés à être posés l'un à côté de l'autre de façon adjacente par leur paroi latérale de sorte que les rainures de ces parois latérales soient disposées en regard et de sorte que les parois distales de ces packs soient adjacentes au mur de fond ;
le bloc d'alimentation comprenant en outre un système de fixation tel que défini précédemment pour fixer les packs batterie dans le local batterie.

Ces caractéristiques et avantages de l'invention apparaitront à la lecture de la description qui va suivre, donnée uniquement à titre d'exemple non limitatif, et faite en référence aux dessins annexés, sur lesquels :
- [Fig 1] la figure 1 est une vue schématique en perspective d'une coque d'un navire en coupe transversale, la coque définissant un local batterie ;
- [Fig 2] la figure 2 est une vue schématique en perspective d'un pack batterie destiné à être installé dans le local batterie de la figure 1 au moyen d'un système de fixation selon un premier mode de réalisation de l'invention ;
- [Fig 3] la figure 3 est une vue agrandie du détail III de la figure 2 ;
- [Fig 4] la figure 4 est une vue agrandie du détail IV de la figure 2 ;
- [Fig 5] la figure 5 est une vue agrandie du détail V de la figure 2 ;
- [Fig 6] la figure 6 est une vue schématique en perspective d'un piton faisant partie du système de fixation selon le premier mode de réalisation de l'invention ;
- [Fig 7] la figure 7 est une vue schématique en perspective d'une pluralité de supports muraux faisant partie du système de fixation selon le premier mode de réalisation de l'invention, les supports muraux étant disposés sur des murs latéraux du local batterie de la figure 1 ;
- [Fig 8] la figure 8 est une vue agrandie du détail VIII de la figure 7 ;
- [Fig 9] la figure 9 est une vue schématique en perspective d'un ridoir faisant partie du système de fixation selon le premier mode de réalisation de l'invention ;
- [Fig 10] la figure 10 est une vue schématique en perspective d'une barre butée faisant partie du système de fixation selon le premier mode de réalisation de l'invention ;
- [Fig 11] la figure 11 est une vue schématique en perspective illustrant la pose d'une première couche de packs batterie sur le plancher du local batterie de la figure 1, au moyen du système de fixation selon le premier mode de réalisation de l'invention, la figure 11 illustrant en outre un bloc d'alimentation selon l'invention au cours de son assemblage ;
- [Fig 12] la figure 12 est une vue schématique en perspective illustrant la pose d'une dernière couche de packs batterie en utilisant une pluralité de ridoirs de la figure 9 et une pluralité de barres butées de la figure 10 ;
- [Fig 13] la figure 13 est une vue schématique en perspective d'un pack batterie destiné à être installé dans le local batterie de la figure 1 au moyen d'un système de fixation selon un deuxième mode de réalisation de l'invention ;
- [Fig 14] la figure 14 est une vue schématique en perspective d'un verrou faisant partie du système de fixation selon le deuxième mode de réalisation de l'invention ; et
- [Fig 15] la figure 15 est une vue schématique en perspective illustrant la pose d'une première couche de packs batterie sur le plancher du local batterie de la figure 1, au moyen du système de fixation selon le deuxième mode de réalisation de l'invention.

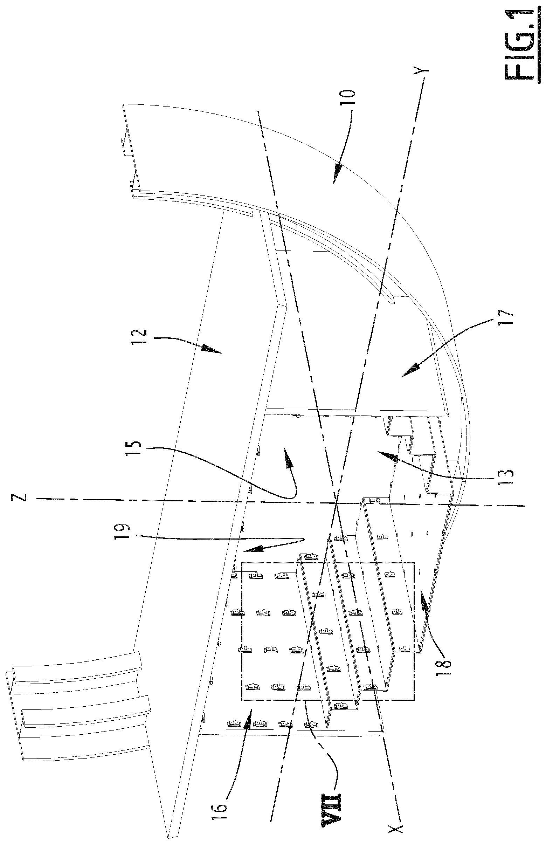

On a en effet représenté sur la figure 1 une coque 10 d'un navire.

Par navire, il est entendu tout engin se déplaçant sur la surface maritime tel qu'un bateau ou un engin submersible tel qu'un sous-marin.

La coque 10 présente une forme étendue selon un axe central. Cet axe sera dénoté par la suite comme axe X.

L'axe X est perpendiculaire à un axe transversal qui sera alors dénoté par la suite comme axe Y.

Dans l'exemple de la figure 1, la coque 10 présente une forme générale cylindrique dont seulement la partie basse est visible sur la figure 1. Cette partie basse présente une forme arrondie définissant notamment un arc de cercle dans chaque coupe transversale.

Bien entendu, dans un cas général, la coque 10 peut présenter toute autre forme connue d'un navire.

La figure 1 fait par ailleurs apparaître une paroi 12 s'étendant transversalement par rapport à la coque 10 dans un plan formé par les axes X et Y.

Cette paroi 12 délimite un local batterie 13 disposé dans la partie basse de la coque 12.

La longueur du local 13 s'étend selon l'axe X entre deux murs dont seulement un est visible sur la figure 1. Ce mur sera appelé par la suite mur de fond 15.

La largeur du local 13 s'étend selon l'axe Y et est délimitée par deux murs latéraux 16 et 17.

Enfin, la hauteur du local 13 s'étend selon un axe Z perpendiculaire aux axes X et Y, entre un plancher 18 et un plafond 19.

Le mur de fond 15 est par exemple sensiblement plat.

Le plafond 19 est également par exemple sensiblement plat et est formé par une partie de la paroi 12 disposée en regard du local batterie 13.

Quant aux murs latéraux 16, 17 et le plancher 18, ceux-ci présentent des surfaces cascadées selon la forme arrondie de la coque 10 en formant ainsi des marches.

En particulier, comme cela est visible sur la figure 1, chacun des murs latéraux 16, 17 présente une portion plate adjacente au plafond 19 et une portion cascadée adjacente au plancher 18.

La portion cascadée de chacun des murs latéraux 16, 17 présente ainsi une pluralité de surfaces plates s'étendant selon l'axe X et écartées les unes par rapport aux autres selon l'axe Y. Ces surfaces plates forment alors des parties verticales des marches ou des contremarches.

De manière analogue, le plancher 18 présente une portion plate et une portion cascadée.

La portion cascadée est également constituée d'une pluralité de surfaces plates qui s'étendent dans ce cas selon l'axe X et sont écartées les unes par rapport aux autres selon l'axe Z. Ces surfaces plates forment alors des parties horizontales des marches.

Sur la figure 1, les murs latéraux 16, 17 et le plancher 18 définissent trois marches de côté de chaque mur latéral 16, 17.

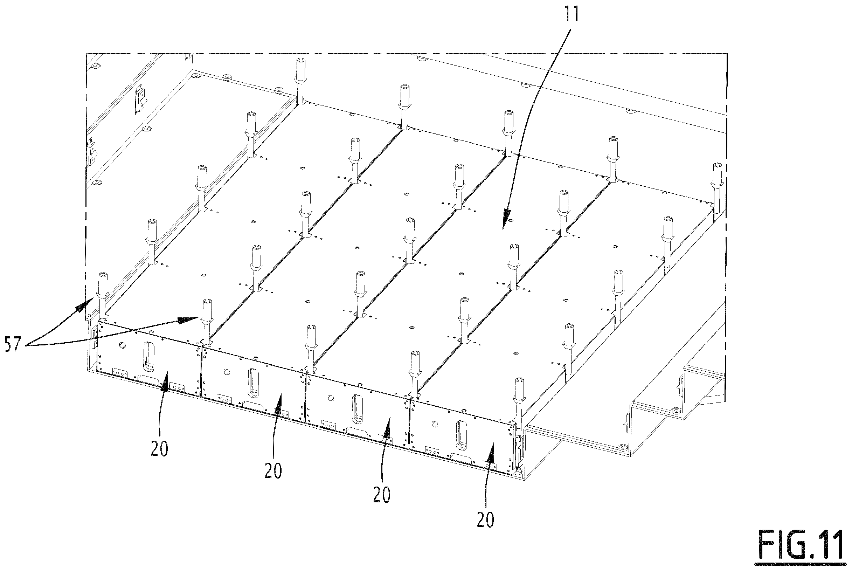

Le local batterie 13 est adapté pour recevoir un bloc d'alimentation 11 selon l'invention. Ce bloc d'alimentation au cours de son assemblage est visible sur la figure 11 et comprend notamment une pluralité de packs batterie 20.

Ces packs batterie 20 sont par exemple sensiblement analogues entre eux.

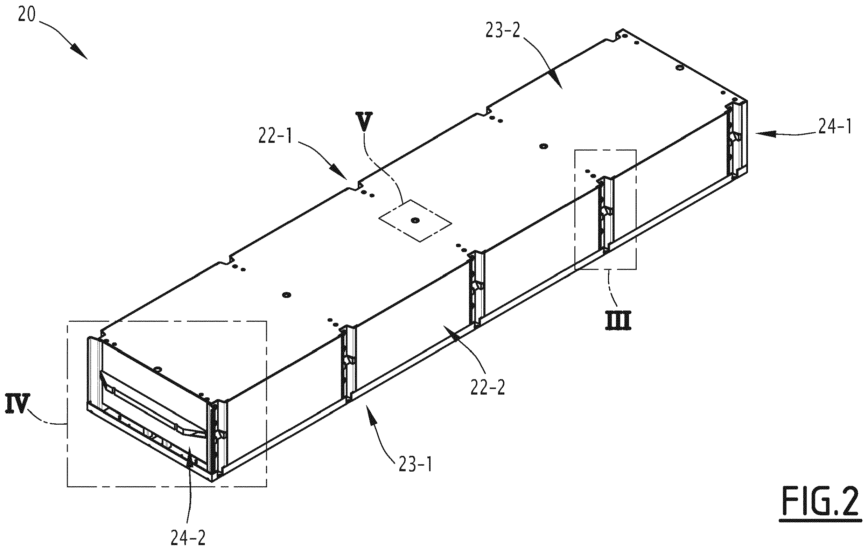

L'un de ces packs 20 est illustré sur la figure 2.

En particulier, comme cela est visible sur cette figure 2, le pack batterie 20 présente une forme sensiblement parallélépipédique.

Autrement dit, le pack batterie 20 définit deux parois latérales désignées sur la figure 2 sous les références 22-1 et 22-2.

Le pack batterie 20 définit en outre une paroi inférieure 23-1 et une paroi supérieure 23-2 ainsi qu'une paroi proximale 24-1 et une paroi distale 24-2.

Les packs batterie 20 sont destinés à être posés dans le local batterie 13 de manière empilée les uns sur les autres.

Ainsi, les packs batterie 20 définissent une pluralité de couches et une pluralité de rangées.

Chacune des couches s'étend dans un plan défini par les axes X et Y entre les murs latéraux 16, 17.

Chacune des rangées s'étend entre le plancher 18 et la plafond 19.

Au sein d'une même rangée, les packs batterie 20 peuvent être alignés selon l'axe Z ou alors peuvent être posés en quinconce, comme cela sera expliqué par la suite.

Ainsi, la paroi inférieure 23-1 de chacun des packs batterie 20 est destinée à être posée sur le plancher 18 ou sur la paroi supérieure 23-2 d'un ou de deux pack(s) batterie d'une couche de packs batterie inférieure.

De la même façon, la paroi supérieure 23-2 de chaque pack batterie 20 est destinée à servir de base de fixation pour une couche de packs batterie supérieure ou alors de bloquer l'ensemble de packs batterie contre le plafond 19.

Par ailleurs, compte tenu des marches formées par les murs 16, 17 et le plancher 18, le nombre de packs batterie 20 dans les couches est variable.

Ce nombre augmente par exemple avec chaque couche jusqu'à devenir constant à partir d'une certaine couche.

Ainsi, par exemple, lorsque les packs batterie sont posés en sept couches, les quatre premières couches comportent un nombre croissant de packs batterie 20 et les trois dernières couches comportent le même nombre de packs batterie 20 que la quatrième couche.

En revenant à la description de la figure 2, la paroi distale 24-2 du pack batterie 20 est destinée à être posée contre le mur de fond 15 du local batterie 13.

La paroi proximale 24-1 est destinée à être libre dans le local batterie 13. En particulier, cette paroi 24-1 permet à l'opérateur faisant le montage et la maintenance de l'ensemble des packs batterie de fixer chaque pack batterie 20, comme cela sera expliqué par la suite.

Chacune des parois latérales 22-1, 22-2 est destinée à entrer en contact soit avec une paroi latérale d'un pack batterie 20 adjacent de la même couche, soit avec l'un des murs latéraux 16, 17.

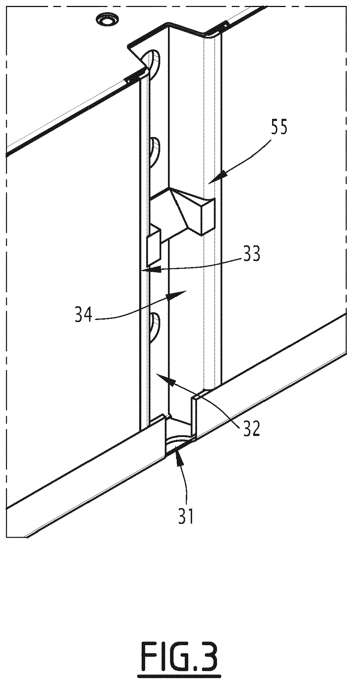

Pour ce faire, chacune des parois latérales 22-1, 22-2 définit une pluralité de rainures 31 de fixation. Un exemple d'une telle rainure 31 est visible sur la figure 3.

Ainsi, en référence à cette figure 3, la rainure 31 s'étend entre la paroi inférieure 23-1 et la paroi supérieure 23-2 du pack batterie 20 de manière perpendiculaire à ces parois.

Dans une coupe transversale, la rainure 31 présente par exemple un demicarré. Ainsi, la rainure 31 présente une paroi de fond 32 et deux parois latérales 33, 34.

Dans l'exemple représenté sur la figure 2, cinq rainures 31 sensiblement identiques sont formées sur chaque paroi latérale 22-1, 22-2 du pack batterie 20.

Par ailleurs, dans le même exemple, une rainure 31 sur chacune des parois latérales 22-1, 22-2 est adjacente à la paroi distale 24-2 et une autre rainure 31 est adjacente à la paroi proximale 24-1.

Autrement dit, dans cet exemple, le pack batterie 20 définit deux rainures 31 adjacentes à la paroi proximale 24-1 et deux rainures 31 adjacentes à la paroi distale 24-2.

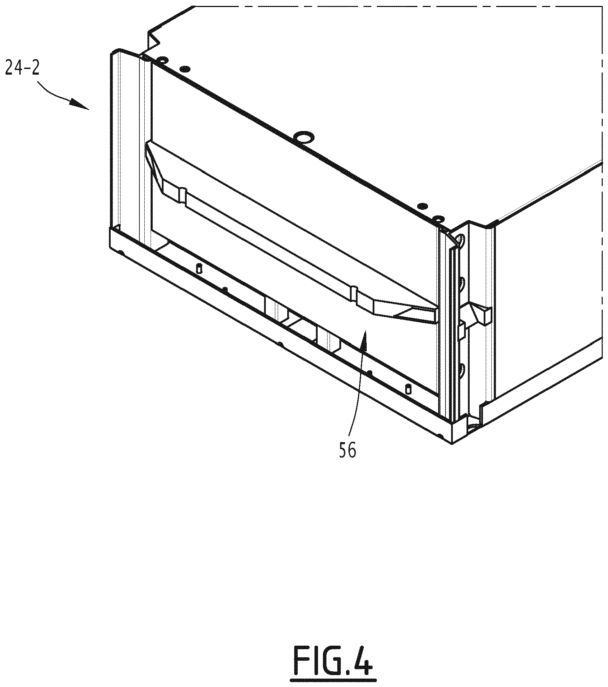

Cela est également visible sur la figure 4 illustrant plus en détail la paroi distale 24-2 du pack batterie 20.

Les rainures 31 appartenant aux parois latérales 22-1, 22-2 de packs batterie différents sont disposées en regard les unes par rapport aux autres.

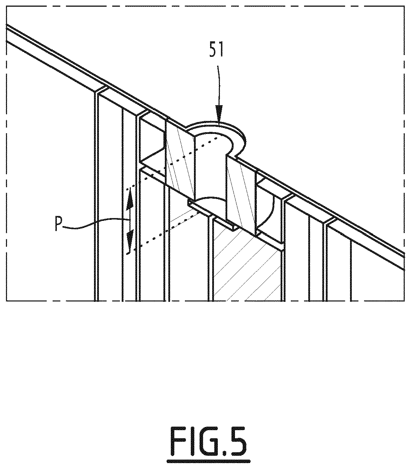

La paroi supérieure 23-2 de chaque pack batterie 20 définit des orifices taraudés 51 dont l'un d'entre eux est illustré en coupe sur la figure 5.

En particulier, comme cela est visible sur la figure 5, la profondeur P de l'orifice 51 est adaptée de sorte à ne pas traverser la charge utile, c'est-à-dire les accumulateurs, du pack batterie 20.

En référence à nouveau à la figure 2, les orifices 51 formés sur la paroi supérieure 23-2 sont au nombre de rainures 31 sur chacune des parois latérales 22-1, 22-2 et sont disposés entre chaque paire des rainures 31 en regard des parois latérales 22-1, 22-2 différentes.

Ainsi, comme cela est visible sur la figure 2, chacun des orifices 51 est disposé au milieu d'une ligne raccordant les rainures 31 en regard.

La fixation des packs batterie 20 en une pluralité de couches s'effectue au moyen d'un système de fixation selon l'invention faisant également partie du bloc d'alimentation 11 selon l'invention.

Un tel système de fixation selon un premier mode de réalisation de l'invention sera désormais expliqué en référence aux figures 2 à 12.

En particulier, le système de fixation selon le premier mode de réalisation de l'invention comprend une pluralité de pièces de blocage latéral 55, une pluralité de pièces de blocage de fond 56, une pluralité de pitons 57, une pluralité de support latéraux 58, une pluralité de ridoirs 59 et une pluralité de barres butées 60.

Les pièces de blocage latéral 55 sont destinées à être montées dans les rainures 31 des packs batterie 20.

Ces pièces de blocage 55 sont par exemple toutes analogues entre elles.

Ainsi, une seule pièce 55 sera décrite par la suite en détail.

Cette pièce 55 est notamment visible sur la figure 3 sur laquelle elle est insérée dans la rainure 31 par exemple au milieu de celle-ci.

Cette pièce de blocage latéral 55 est par exemple fixée dans cette rainure 31 de façon adaptée.

Pour ce faire, cette pièce de blocage latéral 55 comprend par exemple deux pattes de fixation permettant de fixer cette pièce sur les parois latérales 33, 34 de la rainure 31, et un pan incliné par rapport à la paroi de fond 32.

Le pan incliné de la pièce de blocage latéral 55 présente une surface montante selon une direction définie par la rainure 31 et partant de la paroi supérieure 23-2 vers la paroi inférieure 23-1 du pack batterie 20.

Les pièces de blocage de fond 56 sont destinées à être disposées sur les parois distales 24-2 des packs batterie 20. Ces pièces de blocage 56 sont par exemple identiques entre elles. Ainsi, seule une seule pièce de blocage de fond 56 sera expliquée en détail sur la figure 4.

En particulier, comme cela est visible sur la figure 4, la pièce de blocage de fond 56 est fixée sur la paroi distale 24-2 du pack batterie 20 correspondant sur laquelle elle s'étend tout au long de cette paroi par exemple au milieu de celle-ci de façon parallèle aux parois inférieure et supérieure 23-1, 23-2.

Cette pièce de blocage de fond 56 présente par exemple deux rainures qui sont adaptées pour coopérer avec une rondelle biseautée de chaque piton 57 expliqué en détail par la suite.

Chaque piton 57 est adapté pour être inséré dans un orifice formé entre deux rainures 31 en regard pourvues de pièces de blocage latéral 55 de deux packs batterie 20 lorsque ces packs sont mis l'un à côté de l'autre dans une même couche.

Les pitons 57 sont adaptés pour bloquer les packs batterie 20 selon l'axe transversal Y par coopération avec les pièces de blocage latéral 55, pour bloquer les couches de packs batterie entre elles selon l'axe Z et pour bloquer les packs batterie 20 selon l'axe X par coopération avec les pièces de blocage de fond 56 et avec les ridoirs 59 et les barres butées 60, comme cela sera expliqué par la suite.

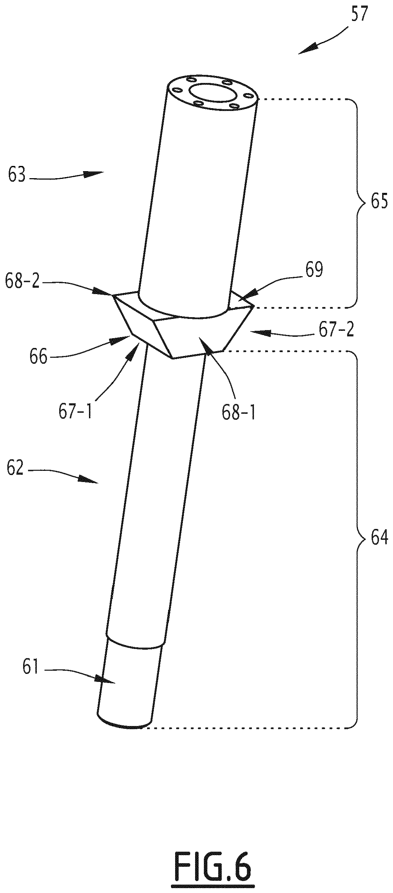

Les pitons 57 sont par exemple tous analogues entre eux. Ainsi, par la suite, seul un piton 57 sera expliqué en détail en référence à la figure 6.

Ainsi, comme cela est visible sur cette figure 6, le piton 57 définit une partie inférieure 61, une partie intermédiaire 62 et une partie supérieure taraudée 63.

Dans l'exemple de la figure 6, les parties inférieure 61 et supérieure 62 sont formées par une tige 64 avec une extrémité filetée correspondant alors à la partie inférieure 61 du piton 57.

Dans le même exemple, la partie supérieure 63 est formée par une douille 65 montée sur la tige 64 et solidaire avec celle-ci. Cette douille 65 permet en particulier le serrage de la tige 64.

La douille 65 est alors d'une forme cylindrique présentant un orifice taraudé.

Plus particulièrement, la partie inférieure 61 du piton 57 et l'orifice taraudé de la douille 65 s'étendent selon une même longueur P qui est par exemple égale à la profondeur P de l'orifice 51 expliqué en référence à la figure 5.

En outre, l'orifice taraudé de la douille 65 est adapté pour entrer en contact avec la partie inférieure filetée 61 d'un autre piton 57.

Autrement dit, la partie inférieure filetée 61 du piton 57 est adaptée pour être vissée dans l'orifice taraudé de la douille 65 d'un autre piton 57.

Le piton 57 comprend en outre une rondelle biseautée 66 montée rotative sur la tige 64 et de façon mobile le long de cette tige 64.

La rondelle biseautée 66 est par exemple de forme trapézoïdale traversée par un orifice central de passage de la tige 64.

La rondelle biseautée 66 définit également deux pans inclinés 67-1 et 67-2 s'étendant de part et d'autre de l'orifice central et deux surfaces plates 68-1 et 68-2 s'étendant de part et d'autre de l'orifice central de manière perpendiculaire aux pans inclinés 67-1, 67-2.

Chacun des pans inclinés 67-1, 67-2 est apte à coopérer avec le pan incliné de chacune des pièces de blocage latéral 55. En particulier, chacun de ces pans de la rondelle biseautée 66 présente une surface inclinée dans le sens opposé de celui du pan de chacune des pièces de blocage latéral 55 lorsque le piton 57 est inséré dans la rainure 31 pourvue d'une telle pièce de blocage latéral 55.

Par ailleurs, la tige 64 est apte à être reçue dans une rainure de chacune des pièces de blocage de fond 56 de sorte à bloquer le placement de la rondelle biseautée 66 selon l'axe perpendiculaire aux parois inférieure 23-1 et supérieure 23-2 du pack batterie 20 correspondant.

Ce blocage est effectué par coopération de la base 69 de la forme trapézoïdale de la rondelle biseautée 66 avec la rainure de la pièce de blocage de fond 56 correspondant.

Les supports muraux 58 permettent de bloquer les parois latérales 22-1, 22-2 des packs batterie 20 contre les murs latéraux 16, 17 du local batterie 13.

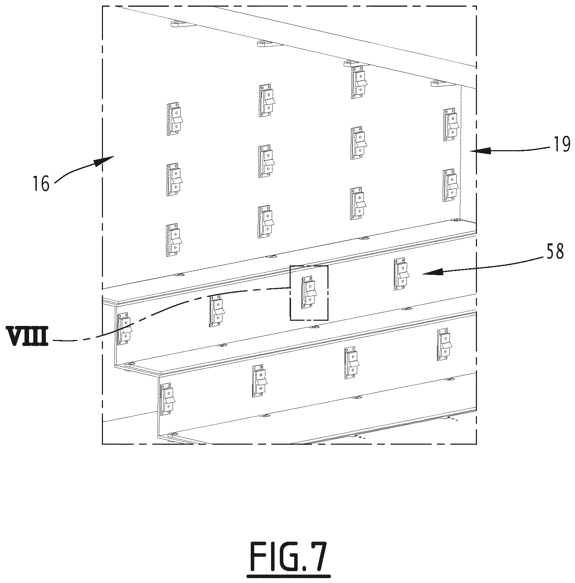

La figure 7 illustre un exemple de distribution de ces supports muraux 58 sur le mur latéral 16 et en particulier sur sa portion plate et sa portion cascadée.

Comme cela est visible sur cette figure 7, les supports muraux 58 sont distribués sur le mur latéral 16 de sorte à ce que chacun d'entre eux soit en regard d'une rainure 31 d'un pack batterie 20 lorsque ce pack est adjacent à ce mur 16.

Ainsi, dans l'exemple de cette figure, le mur 16 comporte cinq supports muraux 58 pour chacune des couches de packs batterie. Il peut par ailleurs être aisément compris qu'une distribution analogue des supports muraux 58 est applicable au mur latéral 17.

Les supports muraux 58 sont par exemple tous analogues entre eux.

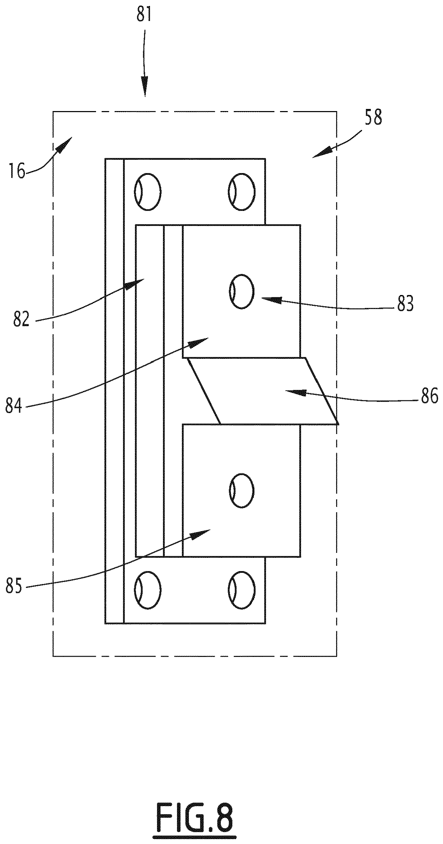

Ainsi, par la suite, un seul support mural 58 sera détaillé en référence à la figure 8 présentant une vue agrandie du détail VIII de la figure 7.

En référence à cette figure 8, le support mural 58 comprend une plaque de fixation 81 destinée à être fixée sur le mur 16, une mousse parasismique 82 montée sur la plaque de fixation 81 et une plaque d'interface 83 montée sur la mousse parasismique 82.

La plaque de fixation 81 est par exemple fixée au mur 16 par des boulons de manière connue en soi.

La mousse parasismique 82 est connue en soi et permet d'amortir des mouvements latéraux les packs batterie 20 d'une même couche et d'absorber des dilatations thermiques le long de l'axe Y.

La plaque d'interface 83 comprend deux parties plates 84, 85 et un pan 86 disposé entre les parties plates 84, 85.

Les parties plates 84, 85 permettent de fixer la plaque d'interface 83 à la mousse parasismique 82.

Le pan 86 présente par exemple une forme et des dimensions équivalentes à celles du pan de chacune des pièces de blocage latéral 55.

Autrement dit, tout comme les pièces de blocage latéral 55, la plaque d'interface 86 est destinée à coopérer avec la rondelle biseautée 66 du piton 57 inséré dans la rainure 31 disposée en regard du support mural 58.

Les ridoirs 59 et les barres butées 60 sont destinés à être disposés entre le plafond 19 et une dernière couche de packs batterie pour bloquer l'ensemble de packs batterie 20 selon l'axe X et avantageusement, selon l'axe Z.

En particulier, les ridoirs 59 sont destinés à coopérer avec le plafond 19 et avec les parois proximales 24-1 des packs batterie 20 de la dernière couche de packs batterie.

Ces ridoirs 59 sont par exemple tous analogues entre eux.

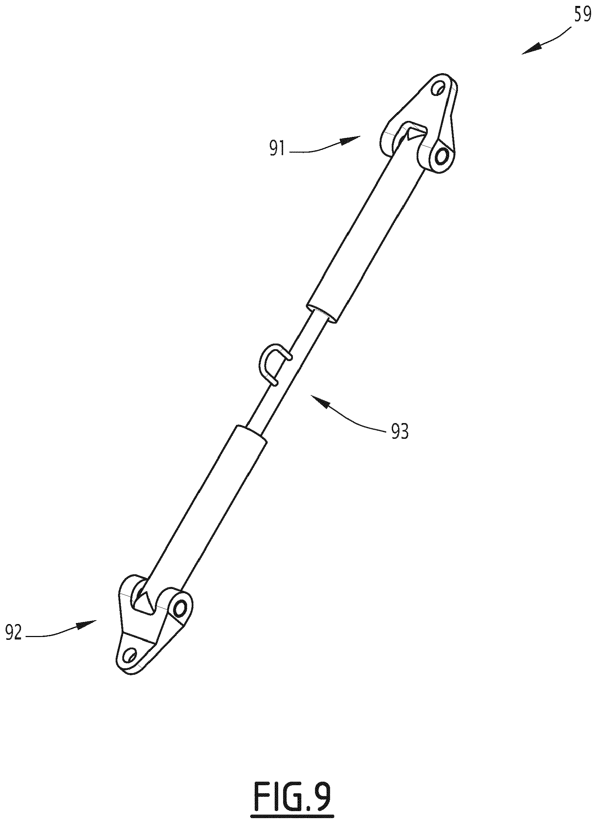

Ainsi, par la suite, seul un ridoir sera expliqué en détail en référence à la figure 9.

En référence à cette figure 9, le ridoir 59 définit une première extrémité 91 et une deuxième extrémité 92.

Ces deux extrémités 91, 92 sont reliées entre elles par une partie intermédiaire 93 présentant un câble ou une tige de longueur réglable.

Ainsi, la distance entre les extrémités 91, 92 peut être réglée en actionnant la partie intermédiaire 93 selon des techniques connues en soi.

Les extrémités 91, 92 sont par exemple identiques.

Ainsi, chacune de ces extrémités 91, 92 présente un orifice de fixation sur une surface sensiblement aplatie. Cet orifice de fixation permet de fixer l'extrémité correspondante soit au plafond 19 (le cas de l'extrémité 91) soit à la paroi supérieure 23-2 dans l'un des packs batterie 20 de la dernière couche de packs batterie (le cas de l'extrémité 92).

En particulier, l'orifice de passage défini dans la deuxième extrémité 92 permet de fixer le ridoir 59 par exemple à un piton 57 disposé dans une rainure 31 adjacente à la paroi proximale 24-1 de l'un des packs batterie 20 de la dernière couche de packs de batterie.

Les barres butées 60 permettent de bloquer les parois distales 24-2 des packs batterie 20 de la dernière couche de packs de batterie contre le plafond 19.

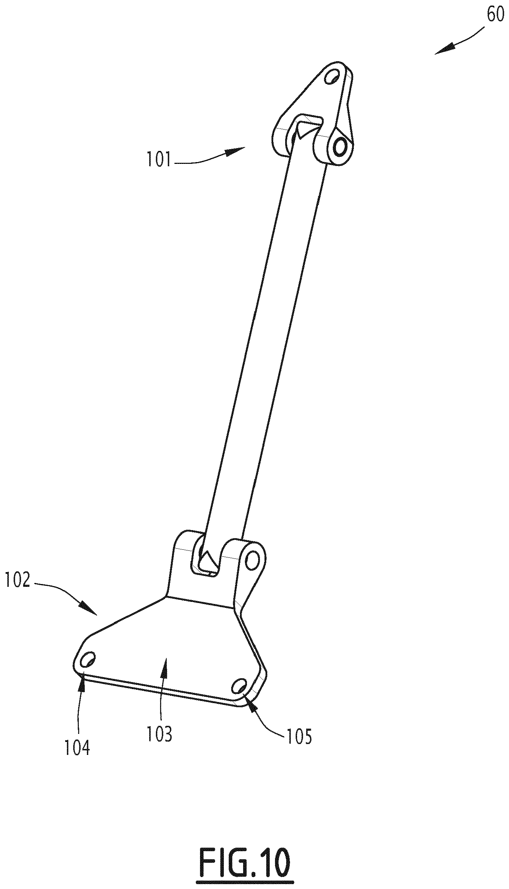

Les barres butées 60 sont par exemple toutes analogues entre elles. Ainsi, par la suite, une seule barre butée 60 sera expliquée en référence à la figure 10.

Ainsi, comme cela est visible sur la figure 10, la barre butée 60 définit une première extrémité 101 et une deuxième extrémité 102.

La première extrémité 101 est destinée à être fixée au plafond 19. Cette extrémité 101 est par exemple analogue à la première extrémité 91 de chacun des ridoirs 93 expliqué précédemment.

Ainsi, tout comme la première extrémité 91 d'un tel ridoir 59, la première extrémité 101 de la barre butée 60 comprend un orifice de fixation au plafond 19.

La deuxième extrémité 102 de la barre butée 60 est destinée à venir en butée selon l'axe X entre la paroi distale 24-2 d'un pack batterie 20 de la dernière couche de packs batterie et le mur de fond 19 du local batterie 13.

La deuxième extrémité 102 comprend une partie plate 103 destinée à venir en appui contre la paroi supérieure 23 d'un pack batterie de la dernière couche de packs batterie.

La deuxième extrémité 102 comprend en outre deux pions 104 et 105 faisant saillie par rapport à la surface plate 103. Ces pions sont destinés à être insérés par exemple librement dans les parties supérieures taraudées 63 des deux pitons 57 insérés dans les rainures de la pièce de blocage 56 disposée sur la paroi distale 24-2 du pack batterie 20 correspondant.

Selon un exemple particulier de réalisation de l'invention, le système de fixation selon le premier mode de réalisation de l'invention comprend en outre une couche de mousse parasismique destinée à être interposée entre le plancher 18 et les packs batterie 20 posés sur celui-ci.

Cette couche de mousse parasismique permet d'amortir les chocs subis par l'ensemble des packs batterie le long de l'axe Z et de prendre en compte les dilatations thermiques de la coque 10.

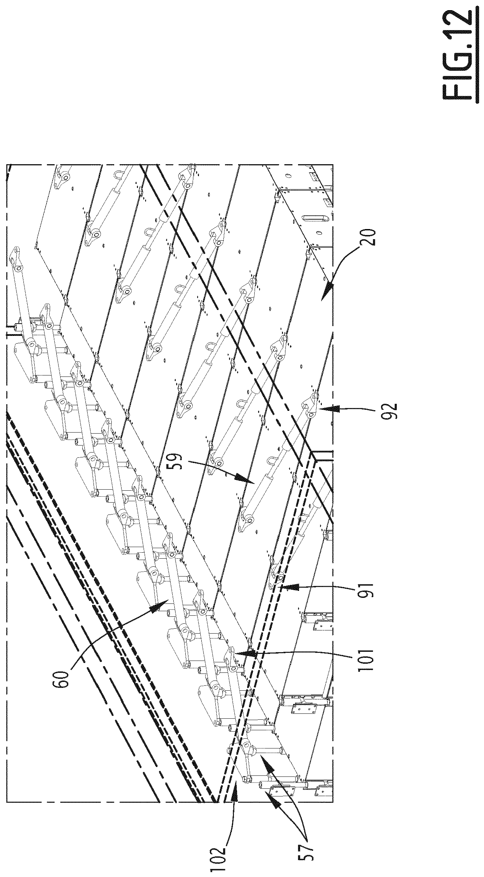

Le procédé de fixation du bloc batterie selon l'invention par le système de fixation selon le premier mode de réalisation de l'invention sera désormais expliqué, en référence notamment aux figures 11 et 12 illustrant la mise en oeuvre de ce procédé.

Initialement, il est considéré que le plancher 18 définit des orifices taraudés nécessaires pour coopérer avec les parties inférieures 61 des pitons 57 de la première couche de packs batterie.

Plus particulièrement, la portion plate du plancher 18 définit pour chaque couple de rainures 31 en regard de chaque couple de packs batteries 20 adjacents destinés à former la première couche, un orifice de passage taraudé en regard de cette rainure 31.

Pour former ces orifices, un gabarit prévu à cet effet peut être utilisé.

Par ailleurs, sur la portion cascadée du plancher 18, des orifices de passage sont également définis pour chacune des rainures 31 des packs batterie 20 destinés à former des couches supérieures s'étendant sur les marches formées par le plancher 18 et les murs latéraux 16, 17.

Comme dans le cas précédent, un gabarit correspondant peut être utilisé pour les orifices correspondants sur chaque surface plate.

En outre, les supports latéraux 58 sont également montés sur les murs latéraux 16, 17 de façon à ce que l'emplacement de chacun d'entre eux corresponde aux emplacements des rainures 31 disposées sur les packs batterie 20 destinés à être adjacents aux murs latéraux 16, 17 correspondants.

Avantageusement, les supports latéraux 58 sont disposés pour chaque couche de packs batterie sauf la dernière.

Finalement, les premières extrémités 91, 101 des ridoirs 59 et des barres butées 60 sont fixées dans les emplacements correspondants du plafond 19.

Lors d'une étape initiale du procédé, un opérateur insère les pièces de blocage latéral 55 dans les rainures 31 des packs batterie 20 et fixe les pièces de blocage de fond 56 sur les parois proximales 24-2 de ces packs 20.

Puis, lors d'une étape suivante, l'opérateur forme une première couche de packs batterie 20.

Pour cela, l'opérateur dispose d'abord une mousse parasismique sur le plancher 18.

Puis, l'opérateur dispose les pitons 57 dans les orifices adjacents au mur de fond 15. Ces pitons 57 sont destinés à être reçus dans les rainures des pièces de blocage de fond 56.

Puis, l'opérateur dispose les packs batterie 20 destinés à former la première couche. Cela peut se faire par exemple en disposant d'abord un pack batterie 20 de manière adjacente avec la paroi latérale 16 puis les autres packs l'un suivant l'autre jusqu'à arriver au dernier pack batterie 20 adjacent à la paroi latérale 17.

Lors de cette disposition des packs batterie 20, l'opérateur engage les rainures de la pièce de blocage de fond 56 de chacun des packs batterie 20 dans les pitons 57 disposés dans les orifices adjacents au paroi de fond 15.

Puis, lors d'une étape suivante, l'opérateur finit la fixation de la première couche de packs batterie en insérant dans les orifices formés entre les rainures 31 des parois latérales 22-1, 22-2 de ces packs et dans les orifices formés entre les parois latérales de ces packs et les supports muraux 58 correspondants.

Cette étape est alors illustrée sur la figure 11.

Puis, lors d'une étape suivante, l'opérateur visse les pitons 57 dans les orifices correspondants du plancher 18.

Ainsi, les rondelles biseautées 66 de chacun de ces pitons 57 bloquent les packs batterie 20 de la première couche selon l'axe Y et selon l'axe Z.

La fixation de couches de packs batterie suivantes s'effectue de la même façon.

En particulier, lorsque les packs batterie 20 de la couche supérieure à monter sont alignés avec les packs batterie 20 de la couche inférieure, les pitons 57 de la couche de packs batterie supérieure sont vissés dans les pitons 57 déjà montés de la couche inférieure.

Lorsque la couche supérieure présente une couche étendue par rapport à la couche inférieure, c'est-à-dire lorsqu'il est nécessaire de fixer au moins certain des packs batterie 20 sur les marches formées par la portion cascadée du plancher 18, les pitons 57 de cette couche supérieure sont alors vissés dans les orifices formés dans ces marches.

Lorsque la couche supérieure de packs batterie présente des rangées en quinconce, chaque pack batterie 20 de cette couche est disposé à cheval entre deux packs batterie 20 de la couche inférieure. Les pitons 57 sont alors vissés dans les orifices 51 prévus au milieu de la paroi supérieure 23-2 des packs batterie 20 formant la couche inférieure.

La fixation de la dernière couche de packs batterie s'effectue différemment.

En particulier, dans ce cas, l'opérateur visse d'abord les pitons 57 dans les pitons adjacents au mur de fond 15, tout comme dans les cas précédents.

Puis, contrairement aux cas précédents, l'opérateur fait descendre les deuxièmes extrémités 102 des barres butées 60 fixées déjà au plafond, dans les parties supérieures taraudées 63 des pitons 57 montés.

Puis l'opérateur insère les packs batterie 20 dans l'espace entre le plafond 19 et la couche inférieure de packs batterie 20 de sorte à engager les rainures des pièces de blocage de fond 56 dans les pitons 57 déjà installés.

Cette étape est illustrée sur la figure 12.

Puis, l'opérateur insère les pitons 57 dans les rainures 31 adjacentes aux parois proximales 24-1 des packs batterie 20 de la dernière couche.

Finalement, lors d'une étape finale, l'opérateur fait descendre les deuxièmes extrémités 92 de chacun des ridoirs 59 fixés au plafond 19 et les fixe dans les pitons 57 correspondants.

On conçoit alors que la présente invention présente un certain nombre d'avantages.

En effet, l'invention permet de fixer des packs batterie en plusieurs couches dans un espace très restreint et subissant des chocs importants, tel qu'un navire.

La fixation s'effectue d'une manière simple tout en permettant de bloquer l'ensemble des packs batterie selon les trois axes X, Y et Z.

En outre, l'invention utilise des pitons identiques pour différentes fonctions ce qui permet de réduire le nombre d'éléments différents nécessaires pour effectuer une telle fixation.

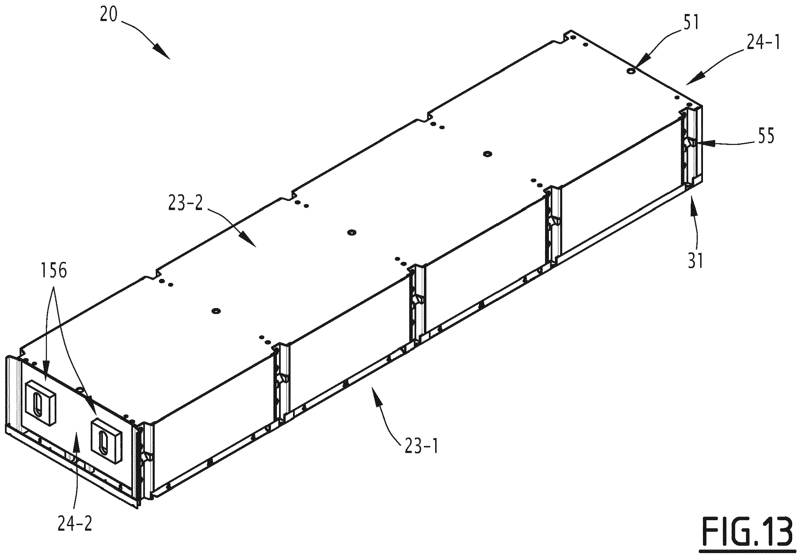

Un système de fixation selon un deuxième mode de réalisation de l'invention sera désormais expliqué en référence aux figures 13 à 15.

En particulier, tout comme le système de fixation selon le premier mode de réalisation, le système de fixation selon le deuxième mode de réalisation de l'invention comprend une pluralité de pièces de blocage latéral 55, une pluralité de pitons 57, une pluralité de support latéraux 58 et une pluralité de ridoirs 59.

Ces pièces sont identiques à celles décrites précédemment et ne seront donc pas décrites de nouveau.

Toutefois, le nombre des pièces de blocage latéral 55, des pitons 57 et des support latéraux 58 utilisé par le système de fixation selon le deuxième mode de réalisation est différent de celui utilisé par le système de fixation selon le premier mode.

En particulier, selon le deuxième mode de réalisation et comme cela est visible sur la figure 13, les pièces de blocage latéral 55 sont destinées à être insérées uniquement dans les rainures 31 adjacentes aux parois proximales 24-1 des packs batteries 20.

De manière analogue, les supports latéraux 58 sont destinées à être montés sur les murs latéraux 16, 17 uniquement dans les emplacements en regard des rainures 31 adjacentes aux parois proximales 24-1 des packs batteries 20.

En conséquence, les pitons 57 sont destinés à être montés uniquement dans les orifices formés par les rainures 31 en regard pourvues chacune d'une pièce de blocage latéral 55 ou par une telle rainure 31 et un support latéral 58.

Par ailleurs, un seul orifice 51 peut être formé sur la paroi supérieure 23-2 de chaque pack batterie 20 au milieu de la ligne passant par les rainures 31 adjacentes à la paroi proximale 24-1 de ce pack batterie 20.

Le système de fixation selon le deuxième mode de réalisation de l'invention comprend en outre une pluralité de pièces de verrouillage 156 et une pluralité de verrous 157.

Chaque pièce de verrouillage 156 présente une structure creuse définissant un logement et est destinée à être disposée sur la paroi distale 24-2 de chaque pack batterie 20.

À cet effet, chaque paroi distale 24-2 est adaptée pour recevoir une ou plusieurs pièces de verrouillage 156.

Dans l'exemple de la figure 13, deux pièces de verrouillage 156 sont disposées sur la paroi distale 24-2 du pack batterie 20 illustré.

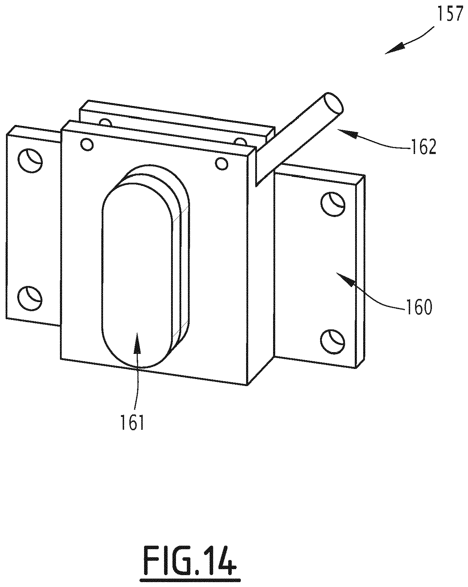

Un verrou 157 est visible sur la figure 14.

En particulier, un tel verrou 157 est destiné à être disposé sur le mur de fond 15 du local batterie 13 en regard d'une pièce de verrouillage 156 d'un pack batterie 20 et apte à coopérer avec cette pièce de verrouillage 156 pour bloquer ce pack batterie 20 selon l'axe X et avantageusement, selon l'axe Y et encore plus avantageusement, selon l'axe Z.

Pour ce faire, le verrou 157 comprend une plaque de fixation 160 destinée à être fixée au mur de fond 15, une forme saillante destinée à être reçue dans le logement de la pièce de verrouillage 156 correspondante et des moyens de serrage 162 de la forme saillante 161 dans le logement de la pièce de verrouillage 156.

Dans l'exemple de la figure 14, les moyens de serrage 162 se présentent sous la forme d'un levier actionnable par l'opérateur entre une position libre et une position serrée.

Ainsi, dans l'exemple des figures 13 et 14, la pièce de verrouillage 156 et le verrou 157 présentent un système de verrouillage de type « Twist-lock ».

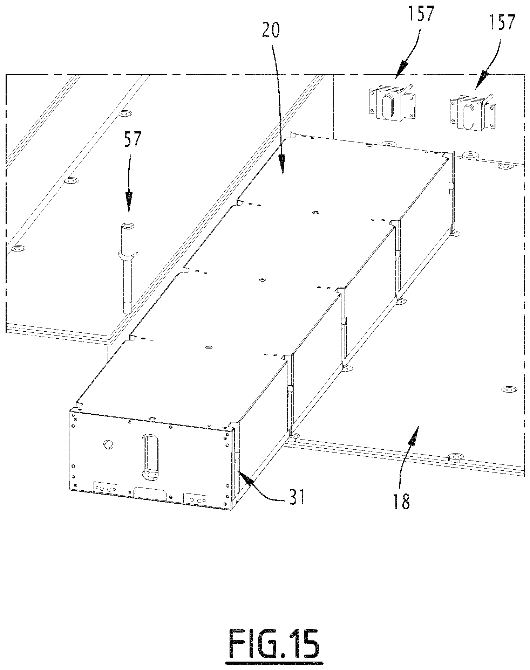

Le procédé de fixation des packs batterie 20 selon l'invention par le système de fixation selon le deuxième mode de réalisation de l'invention sera désormais expliqué, en référence notamment à la figure 15 illustrant la mise en oeuvre de ce procédé.

Initialement, comme dans le cas précédent, il est considéré que le plancher 18 définit des orifices taraudés nécessaires pour coopérer avec les parties inférieures 61 des pitons 57 de la première couche de packs batterie.

Plus particulièrement, la portion plate du plancher 18 définit pour chaque rainure 31 adjacente à la paroi proximale 24-1 de chaque pack batterie 20 destiné à former la première couche, un orifice de passage taraudé en regard de cette rainure 31.

Pour former ces orifices, un gabarit prévu à cet effet peut être utilisé.

Par ailleurs, sur la portion cascadée du plancher 18, des orifices de passage sont également définis pour chacune des rainures 31 adjacentes aux parois proximales 24-1 des packs batterie 20 destinés à former des couches supérieures s'étendant sur les marches formées par le plancher 18 et les murs latéraux 16, 17.

Un gabarit correspondant peut être également utilisé pour les orifices correspondants sur chaque surface plate.

En outre, les supports latéraux 58 sont également montés sur les murs latéraux 16, 17 de façon à ce que l'emplacement de chacun d'entre eux corresponde aux emplacements des rainures 31 adjacentes aux parois proximales 24-1 des packs batterie 20 et destinées à être adjacents aux murs latéraux 16, 17 correspondants.

En outre, les verrous 157 sont montés sur le mur de fond 15 dans les emplacements destinés à être en regard des pièces de verrouillage 156 des packs batterie 20. Pour cela, un gabarit peut être utilisé.

Finalement, les premières extrémités 91, 101 des ridoirs 59 sont fixées dans les emplacements correspondants du plafond 19.

Lors d'une étape initiale du procédé, un opérateur insère les pièces de blocage latéral 55 dans les rainures 31 adjacentes aux parois proximales 24-1 de ces packs 20.

Puis, lors d'une étape suivante, l'opérateur forme une première couche de packs batterie 20.

Pour cela, l'opérateur dispose d'abord une mousse parasismique sur le plancher 18.

Puis, l'opérateur dispose chaque packs batterie 20 destiné à former la première couche de sorte à engager les parties saillantes 161 des verrous 157 dans les logements corresponds des pièces de verrouillage 156.

Cela est illustré sur la figure 15.

Puis, lors d'une étape suivante, l'opérateur finit la fixation de la première couche de packs batterie en insérant des pitons 57 dans les orifices formés entre les rainures 31 adjacentes aux parois proximales 24-1 des packs 20 et dans les orifices formés entre une telle rainure 31 et chacun des supports muraux 58 correspondants.

Puis, lors d'une étape suivante, l'opérateur visse les pitons 57 dans les orifices correspondants du plancher 18.

Ainsi, les rondelles biseautées 66 de chacun de ces pitons 57 bloquent les packs batterie 20 de la première couche selon l'axe Y et selon l'axe Z.

Puis ou avant le serrage des pitons 57, l'opérateur serre les moyens de serrage 162 des verrous 157.

La fixation de couches de packs batterie suivantes s'effectue de la même façon.

En particulier, lorsque les packs batterie 20 de la couche supérieure à monter sont alignés avec les packs batterie 20 de la couche inférieure, les pitons 57 de la couche de packs batterie supérieure sont vissés dans les pitons 57 déjà montés de la couche inférieure.

Lorsque la couche supérieure présente une couche étendue par rapport à la couche inférieure, c'est-à-dire lorsqu'il est nécessaire de fixer au moins certain des packs batterie 20 sur les marches formées par la portion cascadée du plancher 18, les pitons 57 de cette couche supérieure sont alors vissés dans les orifices formés dans ces marches.

Lorsque la couche supérieure de packs batterie présente des rangées en quinconce, chaque pack batterie 20 de cette couche est disposé à cheval entre deux packs batterie 20 de la couche inférieure. Les pitons 57 sont alors vissés dans les orifices 51 prévus au milieu de la paroi supérieure 23-2 des packs batterie 20 formant la couche inférieure.

La fixation de la dernière couche de packs batterie s'effectue différemment.

En particulier, dans ce cas, l'opérateur insère les pitons 57 dans les rainures 31 adjacentes aux parois proximales 24-1 des packs batterie 20 de la dernière couche.

Puis, l'opérateur serre les moyens de serrage 162 via par exemple une ou plusieurs trappes prévues dans le plafond 19 ou par tout autre moyen à sa disposition.

Finalement, lors d'une étape finale, l'opérateur fait descendre les deuxièmes extrémités 92 de chacun des ridoirs 59 fixés au plafond 19 et les fixe dans les pitons correspondants.

On conçoit alors que d'autres modes de réalisation présentant différentes combinaisons des deux modes de réalisations décrits, sont également possibles.

## Revendications

1. Système de fixation d'une pluralité de packs batterie (20) de façon empilée les uns sur les autres à bord d'un navire, le navire comportant un local batterie (13) dont la longueur s'étend selon un axe X et est délimitée par un mur de fond (15), la largeur s'étend selon un axe Y et est délimitée par deux murs latéraux (16, 17) et la hauteur s'étend selon un axe Z et est délimitée par un plancher (18) et un plafond (19) ;
chaque pack batterie (20) présentant une forme sensiblement parallélépipédique définissant deux parois latérales (22-1, 22-2), une paroi proximale (24-1), une paroi distale (24-2), une paroi supérieure (23-2), et une paroi inférieure (23-1), chaque paroi latérale (22-1, 22-2) définissant une pluralité de rainures de fixation (31) ;
les packs batterie (20) étant destinés à être posés en plusieurs couches sur le plancher (18) du local batterie (13) entre ses murs latéraux (16, 17) et contre le mur de fond (15), les packs batterie (20) d'une même couche étant destinés à être posés l'un à côté de l'autre de façon adjacente par leur paroi latérale (22-1, 22-2) de sorte que les rainures (31) de ces parois latérales (22-1, 22-2) soient disposées en regard et de sorte que les parois distales (24-2) de ces packs soient adjacentes au mur de fond (15) ;
le système de fixation comprend :
- une pluralité de pièces de blocage latéral (55), chaque pièce de blocage latéral (55) étant destinée à être insérée dans une rainure (31) d'un pack batterie (20) ;
le système de fixation étant **caractérisé en ce qu'**il comprend de plus
- une pluralité de pitons (57), chaque piton (57) définissant une partie inférieure filetée (61), une partie supérieure taraudée (63) et une partie intermédiaire (62) comportant une rondelle biseautée (66) ;
chaque piton (57) étant adapté pour être inséré dans un orifice formé entre deux rainures (31) en regard pourvues de pièces de blocage latéral (55) de deux packs batterie (20) mis l'un à côté de l'autre dans une même couche et pour bloquer entre les murs latéraux (16, 17) les packs batterie (20) selon l'axe Y par coopération de la rondelle biseautée (66) avec les pièces de blocage latéral (55) ;
lorsqu'il est inséré dans l'orifice correspondant, chaque piton (57) étant adapté en outre pour fixer selon l'axe Z chaque couche de packs batterie (20) supérieure à une couche de packs batterie (20) inférieure par coopération de sa partie inférieure filetée (61) avec la partie supérieure taraudée (63) du piton (57) lui correspondant inséré dans l'orifice formé entre deux packs batterie (20) de la couche de packs batterie (20) inférieure.

2. Système selon la revendication 1, dans lequel :
- chaque rondelle biseautée (66) définit un orifice central et deux pans inclinés (67-1, 67-2) s'étendant de part et d'autre de l'orifice central ; et
- chaque pièce de blocage latéral (55) définit un pan incliné apte à coopérer avec le pan incliné de chaque rondelle biseautée (66).

3. Système selon la revendication 1 ou 2, dans lequel chaque piton (57) comprend une tige (64) formant la partie inférieure filetée (61) et la partie intermédiaire (62) de ce piton (57), et une douille (65) formant la partie supérieure (63) de ce piton (57), la rondelle biseautée (66) définissant un orifice central par lequel elle montée rotative sur la tige (64) de ce piton (57) et mobile le long de celle-ci.

4. Système selon l'une quelconque des revendications précédentes, comprenant en outre une pluralité de supports muraux (58), chaque support mural (58) étant destiné à être monté sur l'un des murs latéraux (16, 17) pour coopérer avec la rondelle biseautée (66) d'un piton (57) inséré entre ce support mural (58) et une rainure (31) d'un pack batterie (20) adjacent à ce mur latéral (16, 17) ;
avantageusement, chaque support mural (58) comprenant une plaque de fixation (81) destinée à être fixée sur le mur latéral (16, 17) correspondant, une mousse parasismique (82) montée sur la plaque de fixation (81) et une plaque d'interface (83) montée sur la mousse parasismique (82) et définissant une forme apte à coopérer avec la rondelle biseautée (66) correspondante pour bloquer entre les murs latéraux (16, 17) selon l'axe Y les packs batterie (20) d'une même couche.

5. Système selon l'une quelconque des revendications précédentes comprenant en outre une couche de mousse parasismique destinée à être entreposée entre le plancher (18) et une première couche de packs batterie (20), des orifices taraudés étant formés dans le plancher (18) pour coopérer avec les parties inférieures filetées (61) des pitons (57) insérés dans les orifices formés entre les rainures (31) des packs batterie (20) de cette première couche de packs batterie (20).

6. Système selon l'une quelconque des revendications précédentes, dans lequel les packs batterie (20) de chaque couche de packs batterie supérieure sont destinés à être disposés de manière alignée selon l'axe Z avec les packs batterie (20) de la couche de packs batterie inférieure adjacente ou en quinconce avec ces packs.

7. Système selon la revendication 6, dans lequel lorsque les packs batterie (20) d'une couche de packs batterie supérieure sont destinés à être disposés en quinconce avec les packs batterie (20) de la couche de packs batterie inférieure adjacente, des orifices taraudés (51) sont définis sur les parois supérieures (23-2) des packs batterie (20) de cette couche de packs batterie inférieure, chacun desdits orifices (51) étant apte à coopérer avec la partie inférieure filetée (61) de chacun des pitons (57) insérés entre les packs batterie (20) de la couche de packs batterie supérieure.

8. Système selon l'une quelconque des revendications précédentes, comprenant en outre une pluralité de ridoirs (59) destinés à être disposés entre le plafond (19) et une dernière couche de packs batterie (20) pour bloquer les packs batterie selon l'axe X.

9. Système selon la revendication 8, dans lequel chaque ridoir (59) comprend une première extrémité (91) destinée à être fixée au plafond (19) et une deuxième extrémité (92) destinée à coopérer avec la partie supérieure taraudée (63) d'un piton (57) inséré dans l'orifice formé entre des rainures (31) de deux packs batterie (20) de la dernière couche de packs batterie, chacune desdites rainures (31) étant adjacente à la paroi proximale (24-1) du pack batterie (20) correspondant.

10. Système selon l'une quelconque des revendications précédentes, comprenant en outre une pluralité de barres butées (60) destinés à être disposés entre le plafond (19) et une dernière couche de packs batterie (20) pour bloquer les packs batterie selon l'axe X.

11. Système selon la revendication 10, dans lequel chaque barre butée (60) comprend une première extrémité (101) destinée à être fixée au plafond (19) et une deuxième extrémité (102) destinée à venir en butée selon l'axe X entre la paroi distale (24-2) d'un pack batterie (20) de la dernière couche de packs batterie et le mur de fond (15).

12. Système selon la revendication 11, dans lequel la deuxième extrémité (102) de chaque barre butée (60) comprend une partie plate (103) et au moins un pion (104, 105) faisant saillie de la partie plate (103) ;
le système comprenant en outre une pluralité de pièces de blocage de fond (56), chaque pièce de blocage de fond (56) étant destinée à être disposée sur la paroi distale (24-2) d'un pack batterie (20) et apte à recevoir au moins un piton (57) pour le bloquer entre cette paroi distale (24-2) et le mur de fond (15) ;
le ou chaque pion (104, 105) de la deuxième extrémité (102) de chaque barre butée (60) étant adaptée pour être installé librement dans la partie supérieure taraudée d'un piton (57) reçu dans une pièce de blocage de fond (56).

13. Système selon l'une quelconque des revendications 1 à 11, comprenant en outre :
- une pluralité de pièces de verrouillage (156), chaque pièce de verrouillage (156) étant destinée à être disposée sur la paroi distale (24-2) d'un pack batterie (20) ;
- une pluralité de verrous (157), chaque verrou (157) étant destiné à être disposé sur le mur de fond (15) du local batterie (13) en regard d'au moins une pièce de verrouillage (156) et apte à coopérer avec cette pièce de verrouillage (156) afin de bloquer le pack batterie (20) selon l'axe X.

14. Procédé de fixation d'une pluralité de packs batterie (20) de façon empilée les uns sur les autres à bord d'un navire, mis en oeuvre au moyen du système de fixation selon l'une quelconque des revendications précédentes et comportant les étapes suivantes :
- insérer les pièces de blocage latéral (55) dans au moins certaines des rainures (31) des packs batterie (20) ;
- constituer une première couche de packs batterie ou une couche de packs batterie intermédiaire en posant chaque pack batterie (20) sur le plancher (18) couvert d'une mousse parasismique ou sur un pack batterie (20) d'une couche de packs batterie inférieure ou à cheval entre deux packs batterie (20) d'une couche de packs batterie inférieure ;
- insérer les pitons (57) dans les orifices formés entre chaque couple des rainures (31) en regard pourvues des pièces de blocage latéral (55) ;
- visser les parties inférieures filetées (61) des pitons (57) dans des orifices formés au plancher (18) ou dans les parties supérieures taraudées (63) des pitons (57) insérés dans les orifices correspondants d'une couche de packs batterie inférieure ou dans des orifices (51) formés sur les parois supérieures (23-2) des packs batterie (20) d'une couche de packs batterie inférieure ;
- constituer une dernière couche de packs batterie en posant chaque pack batterie (20) sur un pack batterie (20) d'une couche de packs batterie inférieure ou à cheval entre deux packs batterie (20) d'une couche de packs batterie inférieure ;
- bloquer la dernière couche de packs batterie contre le plafond (19).

15. Bloc d'alimentation (11) d'un navire, le navire comportant un local batterie (13) dont la longueur s'étend selon un axe X et est délimitée par un mur de fond (15), la largeur s'étend selon un axe Y et est délimitée par deux murs latéraux (16, 17) et la hauteur s'étend selon un axe Z et est délimitée par un plancher (18) et un plafond (19) ;
le bloc d'alimentation (11) comprenant une pluralité de packs batterie (20) fixés de façon empilée les uns sur les autres ;
chaque pack batterie (20) présentant une forme sensiblement parallélépipédique définissant deux parois latérales (22-1, 22-2), une paroi proximale (24-1), une paroi distale (24-2), une paroi supérieure (23-2), et une paroi inférieure (23-1), chaque paroi latérale (22-1, 22-2) définissant une pluralité de rainures de fixation (31) ;
le bloc d'alimentation (11) étant destiné à être installé dans le local batterie (13) de sorte que les packs batterie (20) soient posés en plusieurs couches sur le plancher (18) du local batterie (13) entre ses murs latéraux (16, 17) et contre le mur de fond (15), les packs batterie (20) d'une même couche étant destinés à être posés l'un à côté de l'autre de façon adjacente par leur paroi latérale (22-1, 22-2) de sorte que les rainures (31) de ces parois latérales (22-1, 22-2) soient disposées en regard et de sorte que les parois distales (24-2) de ces packs soient adjacentes au mur de fond (15) ;
le bloc d'alimentation (11) étant **caractérisé en ce qu'**il comprend en outre un système de fixation selon l'une quelconque des revendication 1 à 13 pour fixer les packs batterie (20) dans le local batterie (13).

## Patentansprüche

1. System zur Befestigung einer Vielzahl von Batteriepacks (20) übereinander gestapelt an Bord eines Schiffs, das Schiff umfassend einen Batterieraum (13), dessen Länge sich entlang einer X-Achse erstreckt und von einer Bodenwand (15) begrenzt wird, dessen Breite sich entlang einer Y-Achse erstreckt und von zwei Seitenwänden (16, 17) begrenzt ist und dessen Höhe sich entlang einer Z-Achse erstreckt und von einem Boden (18) und einer Decke (19) begrenzt ist;
wobei jeder Batteriepack (20) eine im Wesentlichen parallelepipedische Form aufweist, die zwei Seitenwände (22-1, 22-2), eine proximale Wand (24-1), eine distale Wand (24-2), eine obere Wand (23-2) und eine untere Wand (23-1) definiert, wobei jede Seitenwand (22-1, 22-2) eine Vielzahl von Befestigungsnuten (31) definiert;
wobei die Batteriepacks (20) dazu bestimmt sind, in mehreren Lagen auf dem Boden (18) des Batterieraums (13) zwischen seinen Seitenwänden (16, 17) und gegen die Bodenwand (15) gelegt zu werden, wobei die Batteriepacks (20) einer gleichen Lage dazu bestimmt sind, nebeneinander benachbart mit ihrer Seitenwand (22-1, 22-2) angeordnet zu sein, sodass die Nuten (31) dieser Seitenwände (22-1, 22-2) einander gegenüber und derart angeordnet sind, dass die distalen Wände (24-2) dieser Packs an die Bodenwand (15) angrenzen; wobei das Befestigungssystem Folgendes umfasst:
- eine Vielzahl von seitlichen Arretierstücken (55), wobei jedes seitliche Arretierstück (55) dazu bestimmt ist, um in eine Nut (31) eines Batteriepacks (20) eingesetzt zu werden;
wobei das Befestigungssystem **dadurch gekennzeichnet ist, dass** es ferner Folgendes umfasst
- eine Vielzahl von Zapfen (57), wobei jeder Zapfen (57) einen unteren Gewindeteil (61), einen oberen Gewindeteil (63) und einen Zwischenteil (62) umfassend eine abgeschrägte Unterlegscheibe (66) definiert;
wobei jeder Zapfen (57) angepasst ist, um in eine Öffnung eingesetzt zu werden, die zwischen zwei einander gegenüberliegenden, mit seitlichen Arretierstücken (55) versehenen Nuten (31) von zwei in derselben Lage nebeneinander angeordneter Batteriepacks (20) gebildet ist, und um die Batteriepacks (20) durch Zusammenwirken der abgeschrägten Unterlegscheibe (66) mit den seitlichen Arretierstücken (55) zwischen den Seitenwänden (16, 17) entlang der Y-Achse zu arretieren;
wobei jeder Zapfen (57), wenn er in die entsprechende Öffnung eingesetzt ist, ferner angepasst ist, um jede obere Lage von Batteriepacks (20) an einer unteren Lage von Batteriepacks (20) entlang der Z-Achse durch Zusammenwirken seines mit Gewinde versehenen unteren Teils (61) mit dem mit Gewinde versehenen oberen Teil (63) des entsprechenden Zapfens (57), der in die zwischen zwei Batteriepacks (20) der unteren Lage von Batteriepacks (20) gebildete Öffnung eingesetzt ist, zu befestigen.

2. Verfahren nach Anspruch 1, wobei:
- jede abgeschrägte Unterlegscheibe (66) eine mittlere Öffnung und zwei schräge Flanken (67-1, 67-2) definiert, die sich auf beiden Seiten der mittleren Öffnung erstrecken; und
- jedes seitliche Arretierstück (55) eine schräge Fläche definiert, die geeignet ist, um mit der schrägen Fläche jeder abgeschrägten Unterlegscheibe (66) zusammenzuwirken.

3. System nach Anspruch 1 oder 2, wobei jeder Zapfen (57) einen Schaft (64), der den unteren Gewindeteil (61) und den Zwischenteil (62) des Zapfens (57) bildet, und eine Hülse (65), die den oberen Teil (63) des Zapfens (57) bildet, umfasst, wobei die abgeschrägte Unterlegscheibe (66) eine mittlere Öffnung definiert, durch die sie drehbar an dem Schaft (64) des Zapfens (57) montiert und entlang desselben beweglich ist.

4. System nach einem der vorherigen Ansprüche, ferner umfassend eine Vielzahl von Wandhaltern (58) umfasst, wobei jeder Wandhalter (58) dazu bestimmt ist, an einer der Seitenwände (16, 17) montiert zu werden, um mit der abgeschrägten Unterlegscheibe (66) eines Zapfens (57) zusammenzuwirken, der zwischen diesem Wandhalter (58) und einer Nut (31) eines an diese Seitenwand (16, 17) angrenzenden Batteriepacks (20) eingesetzt ist;
vorteilhafterweise jede Wandhalterung (58) umfassend eine Befestigungsplatte (81) die dazu bestimmt ist, um an der entsprechenden Seitenwand (16, 17) befestigt zu werden, einen erdbebensicheren Schaum (82), der an der Befestigungsplatte (81) montiert ist, und eine Schnittstellenplatte (83) umfasst, die an dem erdbebensicheren Schaum (82) montiert ist und eine Form definiert, die geeignet ist, um mit der entsprechenden abgeschrägten Unterlegscheibe (66) zusammenzuwirken, um die Batteriepacks (20) einer gleichen Lage zwischen den Seitenwänden (16, 17) entlang der Y-Achse zu arretieren.

5. System nach einem der vorherigen Ansprüche, ferner umfassend eine Lage aus erdbebensicherem Schaumstoff, die dazu bestimmt ist, zwischen den Boden (18) und eine erste Lage von Batteriepacks (20) eingefügt zu werden, wobei in dem Boden (18) Öffnungen mit Innengewinde gebildet sind, die mit den unteren Gewindeteilen (61) von Zapfen (57) zusammenwirken, die in die Öffnungen eingesetzt sind, die zwischen den Nuten (31) der Batteriepacks (20) dieser ersten Lage von Batteriepacks (20) gebildet sind.

6. System nach einem der vorherigen Ansprüche, wobei die Batteriepacks (20) von jeder oberen Lage von Batteriepacks dazu bestimmt sind, ausgerichtet entlang der Z-Achse mit den Batteriepacks (20) der benachbarten unteren Batteriepackschicht oder versetzt zu diesen Packs angeordnet zu werden.

7. System nach Anspruch 6, wobei, wenn die Batteriepacks (20) einer oberen Lage von Batteriepacks dazu bestimmt sind, versetzt zu den Batteriepacks (20) der benachbarten unteren Batteriepackschicht angeordnet zu werden, Gewindebohrungen (51) an den oberen Wänden (23-2) der Batteriepacks (20) dieser unteren Lage von Batteriepacks definiert sind, wobei jede der Bohrungen (51) dazu geeignet ist, um mit dem unteren Gewindeteil (61) von jedem der zwischen die Batteriepacks (20) der oberen Lage von Batteriepacks eingefügten Zapfen (57) zusammenzuwirken.

8. System nach einem der vorherigen Ansprüche, ferner umfassend eine Vielzahl von Versteifungen (59), die dazu bestimmt sind, zwischen der Decke (19) und einer letzten Lage von Batteriepacks (20) angeordnet zu werden, um die Batteriepacks entlang der X-Achse zu arretieren.

9. System nach Anspruch 8, wobei jede Versteifung (59) ein erstes Ende (91) umfasst, das dazu bestimmt ist, um an der Decke (19) befestigt zu werden, und ein zweites Ende (92), das dazu bestimmt, um mit dem oberen Gewindeteil (63) eines Zapfen (57) zusammenzuwirken, der in die zwischen Nuten (31) von zwei Batteriepacks (20) der letzten Lage von Batteriepacks gebildete Öffnung eingesetzt ist, wobei jede der Nuten (31) an die proximale Wand (24-1) des entsprechenden Batteriepacks (20) angrenzt.

10. System nach einem der vorherigen Ansprüche, ferner umfassend eine Vielzahl von Anschlagleiste (60), die dazu bestimmt sind, zwischen der Decke (19) und einer letzten Lage von Batteriepacks (20) angeordnet zu werden, um die Batteriepacks entlang der X-Achse zu arretieren.

11. System nach Anspruch 10, wobei jede Anschlagleiste (60) ein erstes Ende (101), das dazu bestimmt ist, um an der Decke (19) befestigt zu werden, und ein zweites Ende (102), das dazu bestimmt ist, um entlang der X-Achse zwischen der distalen Wand (24-2) eines Batteriepacks (20) der letzten Lage von Batteriepacks und der Rückwand (15) anzuliegen, umfasst.

12. System nach Anspruch 11, wobei das zweite Ende (102) jeder Anschlagleiste (60) einen flachen Teil (103) und mindestens einen Stift (104, 105) umfasst, der von dem flachen Teil (103) hervorsteht;
das System ferner umfassend eine Vielzahl von Bodenarretierstücken (56), wobei jedes Bodenarretierstück (56) dazu bestimmt ist, an der distalen Wand (24-2) eines Batteriepacks (20) angeordnet zu sein, und geeignet ist, mindestens einen Zapfen (57) aufzunehmen, um ihn zwischen dieser distalen Wand (24-2) und der Bodenwand (15) zu arretieren;
der oder jeder Stift (104, 105) des zweiten Endes (102) jeder Anschlagleiste (60) angepasst ist, um frei in den oberen Teil mit Innengewinde eines Zapfens (57), der in einem Bodenblockierstück (56) aufgenommen ist, installiert zu werden.

13. System nach einem der vorherigen Ansprüche 1 bis 11, ferner umfassend:
- eine Vielzahl von Verriegelungsstücken (156), wobei jedes Verriegelungsstück (156) dazu bestimmt ist, an der distalen Wand (24-2) eines Batteriepacks (20) angeordnet zu sein;
- eine Vielzahl von Riegeln (157), wobei jeder Riegel (157) dazu bestimmt ist, an der Rückwand (15) des Batterieraums (13) gegenüber mindestens einem Verriegelungsteil (156) angeordnet zu sein, und geeignet ist, um mit diesem Verriegelungsteil (156) zusammenzuwirken, um das Batteriepack (20) entlang der X-Achse zu arretieren.

14. Verfahren zum Befestigen einer Vielzahl von Batteriepacks (20) auf übereinander gestapelte Weise an Bord eines Schiffs, das mittels des Befestigungssystems nach einem der vorherigen Ansprüche implementiert wird und die folgenden Schritte umfasst:
- Einsetzen der seitlichen Arretierstücke (55) in mindestens einige der Nuten (31) der Batteriepacks (20);
- Bilden einer ersten Lage von Batteriepacks oder einer Lage von zwischenliegenden Batteriepacks, indem jeder Batteriepack (20) auf den mit erdbebensicherem Schaumstoff bedeckten Boden (18) oder auf einen Batteriepack (20) einer unteren Lage von Batteriepacks oder zwischen zwei Batteriepacks (20) einer unteren Lage von Batteriepacks zu legen;
- Einsetzen der Zapfen (57) in die Öffnungen, die zwischen jedem Paar der gegenüberliegenden Nuten (31) gebildet sind, die mit den seitlichen Arretierstücken (55) versehen sind;
- Einschrauben der mit Gewinde versehenen unteren Teile (61) der Zapfen (57) in Öffnungen, die an dem Boden (18) gebildet sind, oder in die mit Gewinde versehenen oberen Teile (63) der Zapfen (57), die in entsprechende Öffnungen einer unteren Lage von Batteriepacks oder in Öffnungen (51), die an den oberen Wänden (23-2) der Batteriepacks (20) einer unteren Lage von Batteriepacks gebildet sind, eingesetzt sind;
- Bilden einer letzten Lage von Batteriepacks, indem jedes Batteriepack (20) auf ein Batteriepack (20) einer unteren Lage von Batteriepacks oder rittlings zwischen zwei Batteriepacks (20) einer unteren Lage von Batteriepacks gelegt wird;
- Arretieren der letzten Lage der Batteriepacks an der Decke (19).

15. Stromversorgungseinheit (11) eines Schiffs, das Schiff umfassend einen Batterieraum (13), dessen Länge sich entlang einer X-Achse erstreckt und von einer Bodenwand (15) begrenzt ist, dessen Breite sich entlang einer Y-Achse erstreckt und von zwei Seitenwänden (16, 17) begrenzt ist und dessen Höhe sich entlang einer Z-Achse erstreckt und von einem Boden (18) und einer Decke (19) begrenzt ist;
die Stromversorgungseinheit (11) umfassend eine Vielzahl von Batteriepacks (20), die auf gestapelte Weise übereinander befestigt sind;
wobei jeder Batteriepack (20) eine im Wesentlichen parallelepipedische Form aufweist, die zwei Seitenwände (22-1, 22-2), eine proximale Wand (24-1), eine distale Wand (24-2), eine obere Wand (23-2) und eine untere Wand (23-1) definiert, wobei jede Seitenwand (22-1, 22-2) eine Vielzahl von Befestigungsnuten (31) definiert;
wobei die Stromversorgungseinheit (11) dazu bestimmt ist, in dem Batterieraum (13) installiert zu werden, sowobei die Batteriepacks (20) in mehreren Lagen auf dem Boden (18) des Batterieraums (13) zwischen seinen Seitenwänden (16, 17) und gegen die Bodenwand (15) gelegt werden, wobei die Batteriepacks (20) einer gleichen Lage dazu bestimmt sind, nebeneinander benachbart mit ihrer Seitenwand (22-1, 22-2) angeordnet zu sein, sodass die Nuten (31) dieser Seitenwände (22-1, 22-2) einander gegenüber und derart angeordnet sind, dass die distalen Wände (24-2) dieser Packs an die Bodenwand (15) angrenzen;
wobei die Stromversorgungseinheit (11) **dadurch gekennzeichnet ist, dass** sie ferner ein Befestigungssystem nach einem der Ansprüche 1 bis 13 umfasst, um die Batteriepacks (20) in dem Batterieraum (13) zu befestigen.

## Claims

1. System for fixing a plurality of battery packs (20) stacked one on top of the other on board a vessel, the vessel comprising a battery room (13) whose length extends along an axis X and is delimited by a back wall (15), the width of which extends along a Y axis and is delimited by two lateral walls (16, 17) and the height of which extends along a Z axis and is delimited by a floor (18) and a ceiling (19);
each battery pack (20) having a substantially parallelepipedal shape defining two lateral walls (22-1, 22-2), a proximal wall (24-1), a distal wall (24-2), an upper wall (23-2), and a bottom wall (23-1), each lateral wall (22-1, 22-2) defining a plurality of fixing grooves (31);
the battery packs (20) being intended to be disposed in several layers on the floor (18) of the battery room (13) between its lateral walls (16, 17) and against the back wall (15), the battery packs (20) of the same layer being designed to be disposed next to each other adjacent to their lateral walls (22-1, 22-2) so that the grooves (31) of these lateral walls (22 -1, 22-2) are arranged opposite and so that the distal walls (24-2) of these packs are adjacent to the back wall (15);
the fixing system comprises:
- a plurality of lateral blocking parts (55), each lateral blocking part (55) being designed to be inserted into a groove (31) of a battery pack (20);
the fixing system being **characterized in that** it further comprises:
- a plurality of pitons (57), each piton (57) defining a threaded lower part (61), a tapped upper part (63) and an intermediate part (62) comprising a bevelled washer (66);
each piton (57) being designed to be inserted into a hole formed between two opposite grooves (31) provided with lateral blocking parts (55) of two battery packs (20) disposed one next to the other in a same layer and to block between the lateral walls (16, 17) the battery packs (20) along the Y axis by interaction of the bevelled washer (66) with the lateral blocking parts (55);
when inserted into the corresponding hole, each piton (57) being further designed to fix along the Z axis each layer of the upper battery packs (20) to a lower layer of battery packs (20) by interaction of its threaded lower part (61) with the tapped upper part (63) of the piton (57) corresponding to it inserted into the hole formed between two battery packs (20) of the lower battery pack layer (20).

2. System according to claim 1, in which:
- each beveled washer (66) defines a central hole and two inclined faces (67-1, 67-2) extending on either side of the central hole; and
- each lateral blocking part (55) defines an inclined face capable of cooperating with the inclined face of each bevelled washer (66).

3. System according to claim 1 or 2, wherein each piton (57) comprises a rod (64) forming the threaded lower part (61) and the intermediate part (62) of this piton (57), and a sleeve (65) forming the upper part (63) of this piton (57), the bevelled washer (66) defining a central hole through which it is rotatably mounted on the rod (64) of this piton (57) and mobile along the rod (64).

4. System according to any preceding claim, further comprising a plurality of wall brackets (58), each wall bracket (58) being designed to be mounted on one of the lateral walls (16, 17) to interact with the bevelled washer (66) of a piton (57) inserted between this wall bracket (58) and a groove (31) of a battery pack (20) adjacent to this lateral wall (16, 17);
advantageously, each wall bracket (58) comprises a fixing plate (81) designed to be fixed to the corresponding lateral wall (16, 17), an earthquake-resistant foam (82) mounted on the fixing plate (81) and an interface plate (83) mounted on the earthquake-resistant foam (82) and defining a shape able to interact with the corresponding bevelled washer (66) to block the battery packs (20) between the lateral walls (16, 17) along the Y axis of the same layer.

5. System according to any one of the preceding claims further comprising a layer of earthquake-resistant foam designed to be stored between the floor (18) and a first layer of battery packs (20), tapped holes being formed in the floor (18) to interact with the threaded lower parts (61) of the pitons (57) inserted in the holes formed between the grooves (31) of the battery packs (20) of this first layer of battery packs (20).

6. System according to any one of the preceding claims, wherein the battery packs (20) of each layer of upper battery packs are designed to be disposed in a manner aligned along the Z axis with the battery packs (20) of the layer of lower battery packs adjacent or staggered with respect to these packs.

7. System according to claim 6, wherein, when the battery packs (20) of an upper battery pack layer are designed to be staggered with the battery packs (20) of the adjacent lower battery pack layer, tapped holes (51) are defined on the upper walls (23-2) of the battery packs (20) of this layer of lower battery packs, each of said holes (51) being able to interact with the threaded lower part (61) of each of the pitons (57) inserted between the battery packs (20) of the upper battery pack layer.

8. System according to any one of the preceding claims, further comprising a plurality of turnbuckles (59) designed to be disposed between the ceiling (19) and a last layer of battery packs (20) to block the battery packs according to the X axis.

9. System according to claim 8, wherein each turnbuckle (59) comprises a first end (91) designed to be fixed to the ceiling (19) and a second end (92) designed to interact with the tapped upper part (63) of an piton (57) inserted in the hole formed between the grooves (31) of two battery packs (20) of the last layer of battery packs, each of said grooves (31) being adjacent to the proximal wall (24-1) the corresponding battery pack (20).

10. System according to any one of the preceding claims, further comprising a plurality of stop bars (60) designed to be disposed between the ceiling (19) and a last layer of battery packs (20) for blocking the battery packs according to the X axis.

11. System according to claim 10, wherein each stop bar (60) comprises a first end (101) designed to be fixed to the ceiling (19) and a second end (102) designed to abut the X axis between the distal wall (24-2) of a battery pack (20) of the last layer of battery packs and the back wall (15).

12. System according to claim 11, wherein the second end (102) of each stop bar (60) comprises a flat part (103) and at least one piton (104, 105) projecting from the flat part (103);
the system further comprising a plurality of bottom blocking parts (56), each bottom blocking part (56) being designed to be disposed on the distal wall (24-2) of a battery pack (20) and suitable for receiving at least one piton (57) to block it between this distal wall (24-2) and the back wall (15); the or each piton (104, 105) of the second end (102) of each stop bar (60) being designed to be installed freely in the tapped upper part of an piton (57) received in a bottom blocking part ( 56).

13. System according to any one of claims 1 to 11, further comprising:
- a plurality of locking parts (156), each locking part (156) being designed to be disposed on the distal wall (24-2) of a battery pack (20);
- a plurality of locks (157), each lock (157) being designed to be disposed on the back wall (15) of the battery room (13) facing at least one locking part (156) and able to interact with this locking part (156) in order to lock the battery pack (20) along the X axis.

14. Method of fixing a plurality of battery packs (20) stacked on top of each other on board a vessel, implemented by means of the fixing system according to any one of the preceding claims and comprising the following steps :
- insert the lateral blocking parts (55) in at least some of the grooves (31) of the battery packs (20);
- constitute a first layer of battery packs or a layer of intermediate battery packs by disposing each battery pack (20) on the floor (18) covered with an earthquake-resistant foam or on a battery pack (20) with a lower layer of battery packs or straddling two battery packs (20) of a lower battery pack layer;
- insert the pitons (57) into the holes formed between each pair of the grooves (31) facing each other provided with the lateral blocking parts (55);
- screw the threaded lower parts (61) of the pitons (57) into the holes formed in the floor (18) or in the tapped upper parts (63) of the pitons (57) inserted into the corresponding holes of a lower battery pack layer or in holes (51) formed on the upper walls (23-2) of the battery packs (20) of a lower battery pack layer;
- constitute a last layer of battery packs by disposing each battery pack (20) on a battery pack (20) of a lower layer of battery packs or between two battery packs (20) of a lower layer of battery packs;
- block the last layer of battery packs against the ceiling (19).

15. Power supply unit (11) of a vessel, the vessel having a battery room (13) whose length extends along an X axis and is delimited by a back wall (15), wherein the width extends along a Y axis and is delimited by two lateral walls (16, 17) while the height extends along a Z axis and is delimited by a floor (18) and a ceiling (19);
the power supply (11) comprising a plurality of battery packs (20) stacked on top of each other;
each battery pack (20) having a substantially parallelepipedal shape defining two lateral walls (22-1, 22-2), a proximal wall (24-1), a distal wall (24-2), an upper wall (23-2), and a bottom wall (23-1), each lateral wall (22-1, 22-2) defining a plurality of fixing grooves (31); the power supply unit (11) being designed to be installed in the battery room (13) so that the battery packs (20) are laid in several layers on the floor (18) of the battery room (13) between its lateral walls (16, 17) and against the back wall (15), the battery packs (20) of the same layer being designed to be disposed one next to the other adjacent to their lateral walls(22-1, 22-2) so that the grooves (31) of these lateral walls (22-1, 22-2) are arranged opposite and so that the distal walls (24-2) of these packs are adjacent to the bottom wall (15);
the power supply unit (11) being **characterized in that** it further comprises a fixing system according to any one of claims 1 to 13 for fixing the battery packs (20) in the battery room (13).
